# EUROPÄISCHE PATENTSCHRIFT

(11) **EP 1 516 990 B1**
(45) Veröffentlichungstag und Bekanntmachung des Hinweises auf die Patenterteilung: **20.12.2006**
(21) Anmeldenummer: 04021818.2
(22) Anmeldetag: 14.09.2004
(51) Int. Cl.: E05D 15/06, B60J 1/16

(54) **Zusammengesetztes Bauteil, insbesondere für ein Schiebefenster eines Kraftfahrzeugs**
Assembly, in particular for a vehicle sliding window
Organe composite, notamment pour une vitre coulissante de véhicule

(30) Priorität: 18.09.2003 DE 10343216
(43) Veröffentlichungstag der Anmeldung: 23.03.2005
(73) Patentinhaber: DURA Automotive Plettenberg Entwicklungs- und Vertriebs GmbH, 58840 Plettenberg (DE)
(72) Erfinder: Kraus, Jürgen, 58802 Balve (Garbeck) (DE); Rau, Holger, 51580 Sinspert (DE); Gerndorf, Ralf, D-57413 (DE)
(74) Vertreter: Zinnecker, Armin

(56) Entgegenhaltungen:
- DE-A- 19 916 619
- FR-A- 2 577 483
- US-A- 2 409 711
- US-A- 4 601 927
- US-A- 4 635 420

## Beschreibung

Die Erfindung betrifft eine Führungsschiene für ein bewegliches Fenster, insbesondere ein Schiebefenster, eines Kraftfahrzeugs, mit einer Unterschale, einer Oberschale und einem Einleger zwischen der Unterschale und der Oberschale. Die Führungsschiene kann auch für andere Bestandteile eines Kraftfahrzeugs verwendet werden, insbesondere für eine bewegliche Platte oder ein sonstiges Karosserieelement eines Kraftfahrzeugs.

Aus der DE 199 16 619 A1 ist ein zusammengesetztes Bauteil bekannt, das aus drei Einzelteilen besteht, nämlich einem nach einem Spritzgußverfahren für Kunststoffe hergestelltem Oberteil, einem aus Kunststoff bestehenden Unterteil und einem als Blechteil ausgeführten Verstärkungsteil, das zwischen dem Oberteil und dem Unterteil angeordnet ist. Um Wärmedehnungen und Bauteiltoleranzen ausgleichen zu können, sind im Bereich der Verbindungsstellen zwischen den Einzelteilen Profilelemente aus elastischem Material wirksam.

Aus der FR-A-2 577 483 ist ein zusammengesetztes Bauteil für ein Fenster eines Kraftfahrzeugs mit einer Unterschale und einer Oberschale bekannt, die zwischen sich ein Teil der Karosserie aufnehmen.

Aufgabe der Erfindung ist es, eine verbesserte Führungsschiene der eingangs angegebenen Art vorzuschlagen.

Erfindungsgemäß wird diese Aufgabe durch eine Führungsschiene mit den Merkmalen des Anspruchs 1 gelöst. Die Unterschale und die Oberschale sind an Fügestellen miteinander verbunden. Die Oberschale und/oder die Unterschale weisen eine oder mehrere Führungsbahnen, insbesondere Führungsnuten, für ein bewegliches Fenster oder Schiebefenster eines Kraftfahrzeugs auf.

Vorteilhafte Weiterbildungen sind in den Unteransprüchen beschrieben.

Die Unterschale und die Oberschale können miteinander verklebt und/oder verschweißt sein. Hierdurch wird eine erhöhte Stabilität des zusammengesetzten Bauteils erreicht. Die Anordnung ist vorzugsweise derart getroffen, daß der Einleger kraftschlüssig und/oder formschlüssig zwischen der Unterschale und der Oberschale gehalten ist, wodurch die Stabilität der Führungsschiene weiter erhöht werden kann. Vorteilhaft ist es, wenn die Oberschale und die Unterschale durch Vibrationsschweißen und/oder Reibschweißen miteinander verbunden sind.

Die Unterschale und/oder die Oberschale können Rippen aufweisen. Dabei kann es sich um Längsrippen und/oder diagonal oder schräg verlaufende Rippen und/oder Querrippen handeln.

Vorteilhaft ist es, wenn die Fügestellen an den umlaufenden Rändern der Unterschale und der Oberschale und/oder an den Rippen liegen. Die Fügestellen können im Bereich der Mitte der Rippen und/oder an den Enden der Rippen liegen. Insbesondere können die Rippen Erhebungen aufweisen, an deren Enden die Fügestellen vorgesehen sind.

Eine weitere vorteilhafte Weiterbildung ist dadurch gekennzeichnet, daß der Einleger Durchbrechungen aufweist. Die Durchbrechungen sind vorzugsweise als Schlitze ausgebildet. Vorteilhaft ist es, wenn die, Durchbrechungen bzw. Schlitze in Längsrichtung der Führungsschiene verlaufen. Hierdurch können Eigenspannungen, die durch Temperaturschwankungen entstehen können, reduziert werden. Bei Temperaturschwankungen sind die Längenänderungen der Oberschale und der Unterschale in Längsrichtung am größten. Durch die ebenfalls in Längsrichtung verlaufenden Durchbrechungen bzw. Schlitze werden die Längenausdehungen der Oberschale und der Unterschale von der Verklebung des Einlegers mit dem Fenster entkoppelt. Oberschale und Unterschale können sich in Längsrichtung ausdehnen, ohne hierdurch Kräfte auf die Verklebung des Einlegers mit dem Fenster auszuüben.

Eine weitere vorteilhafte Weiterbildung ist dadurch gekennzeichnet, daß die Durchbrechungen bzw. Schlitze von Fügestellen oder Erhebungen, an denen Fügestellen liegen, durchgriffen werden. Bei den Erhebungen kann es sich insbesondere um Erhebungen der Rippen handeln oder um Erhebungen, die an Rippen vorgesehen sind.

Eine weitere vorteilhafte Weiterbildung ist dadurch gekennzeichnet, daß an einer oder mehreren Durchbrechungen bzw. Schlitzen und/oder an einer oder mehreren Fügestellen bzw. Erhebungen Ausrichtflächen vorgesehen sind. Hierdurch kann eine eindeutige Lagezuordnung zwischen den einzelnen Teilen der zusammenge-Führungsschiene erreicht werden, insbesondere zwischen dem Einleger und der Unterschale und/oder der Oberschale.

Nach einer weiteren vorteilhaften Weiterbildung sind an einer oder mehreren Durchbrechungen bzw. Schlitzen und/oder an einer oder mehreren Fügestellen bzw. Erhebungen Ausgleichsfugen vorgesehen. Hierdurch kann insbesondere ein Längenausgleich für unterschiedliche Wärmedehnungen der einzelnen Teile der Führungsschiene geschaffen werden. Besonders vorteilhaft ist es, wenn zwei Ausrichtflächen zwischen zwei benachbarten Durchbrechungen bzw. Schlitzen und an den zugehörigen Fügestellen bzw. Erhebungen vorgesehen sind und wenn an den übrigen Durchbrechungen bzw. Schlitzen und Fügestellen bzw. Erhebungen Ausgleichsfugen vorgesehen sind. Dadurch wird an einer Stelle, vorzugsweise im Bereich der Mitte der Führungsschiene, eine eindeutige Lagezuordnung der Bestandteile des zusammengesetzten Bauteils erreicht. Die durch unterschiedliche Wärmedehnungen erzeugten Längenänderungen können an den im übrigen vorhandenen Ausgleichsfugen ausgeglichen werden.

Vorteilhaft ist es, wenn der Einleger eine Abwinkelung aufweist. Wenn der Einleger als Blechteil ausgebildet ist, kann die Abwinkelung als Abkantung hergestellt sein. Die Abwinkelung dient vorzugsweise als Fügestelle, insbesondere Klebestelle, für ein Fenster oder Schiebefenster eines Kraftfahrzeugs oder einen Fänger, der mit dem Fenster bzw. Schiebefenster des Kraftfahrzeugs verbunden oder verbindbar ist.

Vorteilhaft ist es, wenn einer oder mehrere Fänger vorgesehen sind, die mit dem zusammengesetzten Bauteil verbindbar oder verbunden sind. Vorzugsweise sind der oder die Fäng mit dem Bauteil lösbar verbindbar. Vorzugsweise können der oder die Fänger in die Führungsschiene eingesetzt oder eingeclipst werden. Der Fänger ist vorzugsweise mit der Karosserie eines Kraftfahrzeugs verbindbar oder verbunden, insbesondere verklebbar oder verklebt. Er kann eine Fügestelle mit dem Fenster bzw. Schiebefenster bilden.

Vorteilhaft ist es, wenn in der oder den Führungsbahnen bzw. Führungsnuten eines oder mehrere Reinigungslöcher vorgesehen sind. Hierdurch kann erreicht werden, daß die Führungsbahnen bzw. Führungsnuten selbstreinigend sind.

Ein Ausführungsbeispiel der Erfindung wird nachstehend anhand der beigefügten Zeichnung im einzelnen erläutert. In der Zeichnung zeigt
- Fig. 1: ein Seitenfenster eines Kraftfahrzeugs in einer seitlichen Einbauansicht,
- Fig. 2: die einzelnen Teile des zusammengesetzten Bauteils in einer perspektivischen Explosionsansicht,

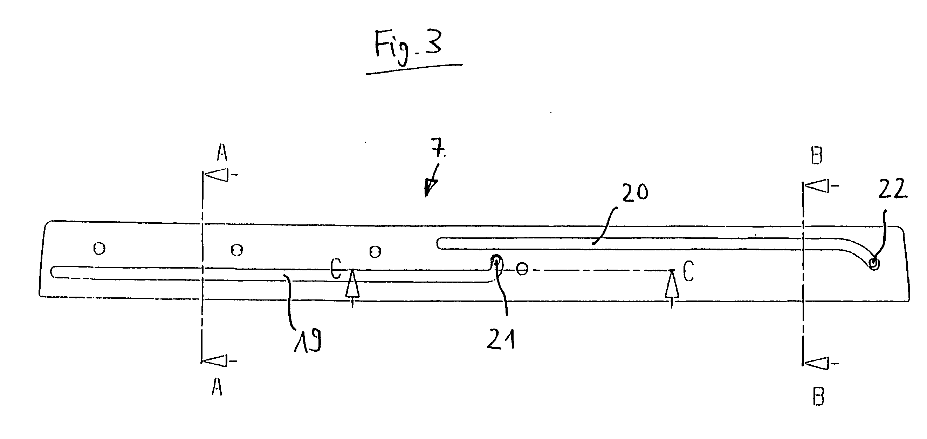

- Fig. 3: das zusammengesetzte Bauteil gemäß Fig. 2 in einer Draufsicht,
- Fig. 4: einen Schnitt längs der Linie A-A in Fig. 3,

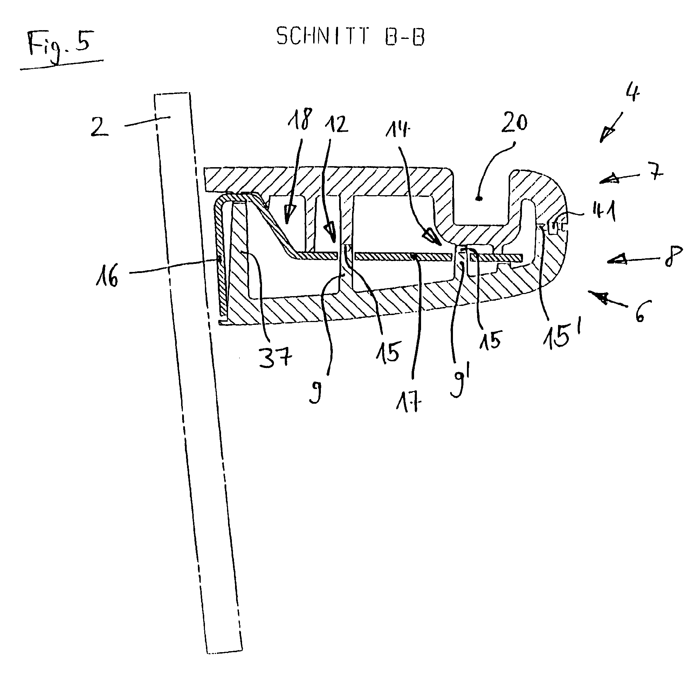

- Fig. 5: einen Schnitt längs der Linie B-B in Fig. 3 und
- Fig. 6: einen Schnitt längs der Linie C-C in Fig. 3.

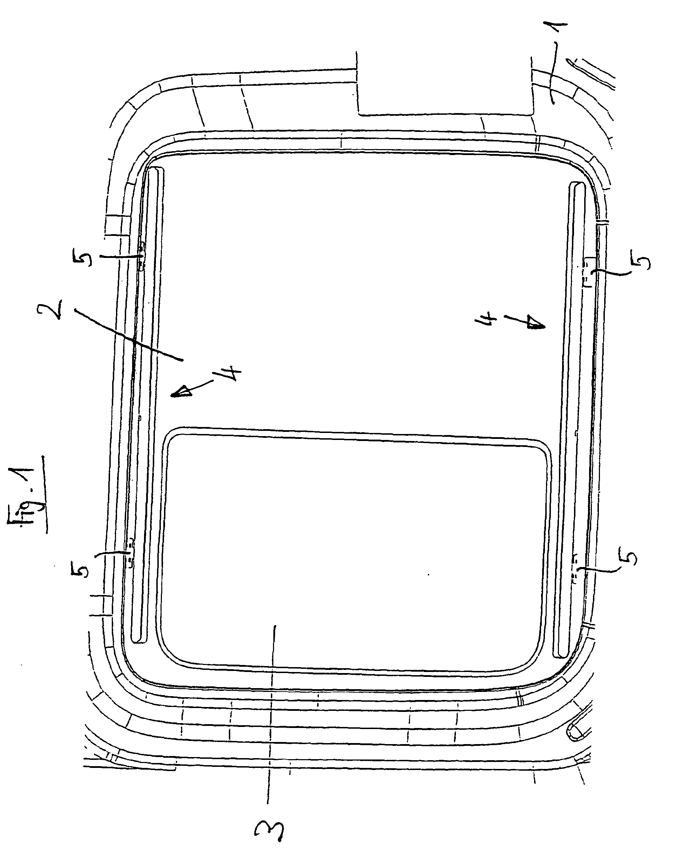

In Fig. 1 ist ein Teil einer Karosserie 1 eines Kraftfahrzeugs gezeigt, in die ein Fenster 2 eingesetzt ist, in dem sich ein bewegliches Fenster 3 befindet. Das feste Fenster 2 weist in seinem oberen und in seinem unteren Bereich jeweils eine Führungsschiene 4 auf, deren Fänger 5 mit dem festen Fenster 2 verklebt sind. Die in Fig. 1 gezeigte Führungsschiene 4 verläuft horizontal. In anderen Anwendungsfällen kann die Führungsschiene 4 schräg verlaufen.

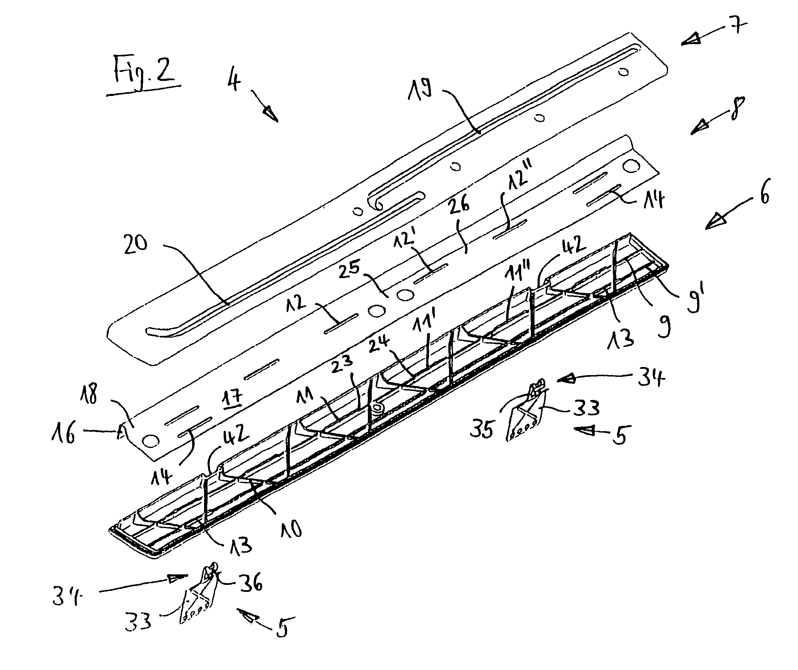

Wie in Fig. 2 dargestellt umfaßt die Führungsschiene 4, eine Unterschale 6 aus Kunststoff, eine Oberschale 7 aus Kunststoff und einen Einleger 8 aus Stahl bzw. Stahlblech, der im montierten Zustand zwischen der Unterschale 6 und der Oberschale 7 liegt. Die Unterschale 6 weist auf ihrer der Oberschale 7 zugewandten Seite in der aus Fig. 2 ersichtlichen Weise Rippen auf, nämlich Längsrippen 9, 9' und schräg verlaufende Rippen 10, die zickzack-förmig verlaufen.

Die Längsrippe 9 weist sechs Erhebungen 11 auf, die jeweils einen zugehörigen Längsschlitz 12 des Einlegers 8 durchgreifen. Im Bereich der Enden der Längsrippe 9', die parallel und beabstandet zur Längsrippe 9 verläuft, sind zwei weitere Erhebungen 13 vorgesehen, die entsprechende weitere Längsschlitze 14 im Einleger 8 durchgreifen. Die oberen Enden oder Endbereiche der Erhebungen 11 und weiteren Erhebungen 13 bilden Fügestellen 15, an denen die Unterschale 6 und die Oberschale 7 miteinander verbunden, nämlich vibrationsgeschweißt sind. Weitere Fügestellen 15' werden von den umlaufenden Rändern der Unterschale 6 und der Oberschale 7 gebildet. Auch an diesen Fügestellen 15' sind die Unterschale 6 und die Oberschale 7 miteinander verbunden, nämlich vibrationsgeschweißt.

Der Einleger 8 weist eine Abwinkelung 16 auf, die mit der ebenen Hauptfläche 17 des Einlegers 8 über eine Abkröpfung 18 verbunden ist. Hauptfläche 17, Abkröpfung 18 und Abwinkelung 16 werden durch Biegen eines Stahlblechs hergestellt. Die ebene Hauptfläche 17 verläuft im Bereich der Mitte zwischen der Unterschale 6 und der Oberschale 7. Die Abkröpfung 18 ist auf der dem feststehenden Fenster 2 zugewandten Seite der Führungsschiene 4 vorgesehen. Sie verläuft zur Oberschale 7 hin. Die Abwinkelung 16 verläuft von dort zur Unterschale 6 hin. Sie ist mit dem feststehenden Fenster 2 verklebt.

In der Oberschale 7 sind zwei Führungsnuten 19, 20 vorgesehen, in die entsprechende Führungszapfen (in der Zeichnung nicht dargestellt) des beweglichen Fensters 3 eingreifen, die auf diese Weise gleitend geführt sind. An einem Ende jeder Führungsnut 19, 20 ist jeweils ein Reinigungsloch 21, 22 vorhanden, so daß die Führungsnuten 19, 20 selbstreinigend sind und eine dauerhafte Funktion gewährleistet ist.

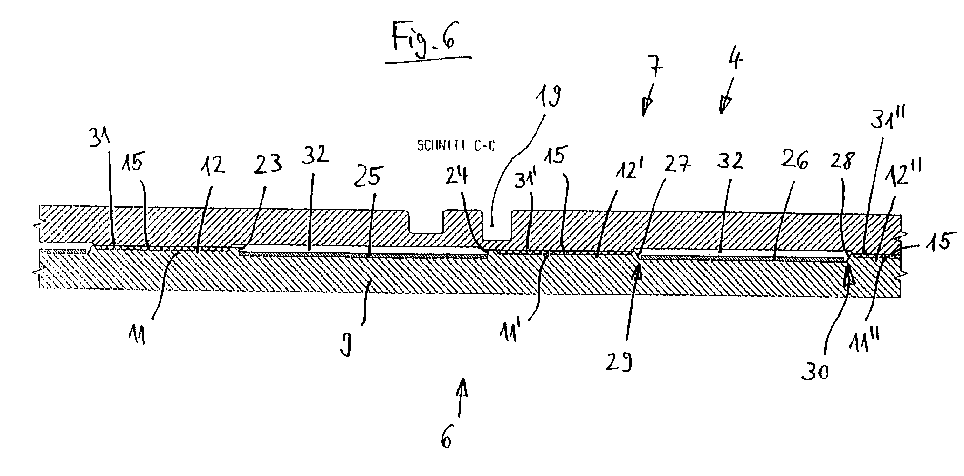

Wie aus Fig. 6 ersichtlich sind an der Rippe 9 zwei Ausrichtflächen 23, 24 vorgesehen. Die Ausrichtfläche 23 wird von der rechten Endfläche der Erhebung 11 gebildet. Die Ausrichtfläche 24 wird von der linken Endfläche der Erhebung 11', die der Erhebung 11 rechts benachbart ist, gebildet. Die zugehörigen Ausrichtflächen im Einleger 8 sind die rechte Endfläche des Längsschlitzes 12 und die linke Endfläche des Längsschlitzes 12', der dem Längsschlitz 12 auf der rechten Seite benachbart ist. Der Bereich 25 des Einlegers 8 zwischen den Längsschlitzen 12 und 12' liegt in der aus Fig. 6 ersichtlichen Weise zwischen den Ausrichtflächen 23 und 24 in der Unterschale 6. Dabei ist der Abstand der Ausrichtflächen 23 und 24 voneinander genauso groß wie die Länge des Bereichs 25, so daß der Bereich 25 spielfrei zwischen den Ausrichtflächen 23 und 24 liegt.

Der auf der rechten Seite nächste Bereich 26 des Einlegers 8 zwischen den Längsschlitzen 12' und 12" ist etwas kürzer als der Abstand der rechten Endfläche 27 der Erhebung 11' und der linken Endfläche 28 der Erhebung 11". Auf diese Weise werden zwischen den Enden des Bereichs 26 und den angrenzenden Endflächen 27 und 28 Ausgleichsfugen 29 und 30 geschaffen, durch die unterschiedliche Wärmedehnungen der einzelnen Teile, also der Unterschale 6, der Oberschale 7 und des Einlegers 8, ausgeglichen werden können.

Den Erhebungen 11, 11', 11 " liegen entsprechende Erhebungen 31, 31' und 31" der Oberschale 7, die an Rippen der Oberschale 7 ausgebildet sein können, gegenüber. Die Fügestellen 15 befinden sich im Überlappungsbereich der Erhebungen 11, 11', 11" und 31, 31', 31". Zwischen den Erhebungen 31, 31' und 31" der Oberschale 7 sind Vertiefungen 32 vorgesehen.

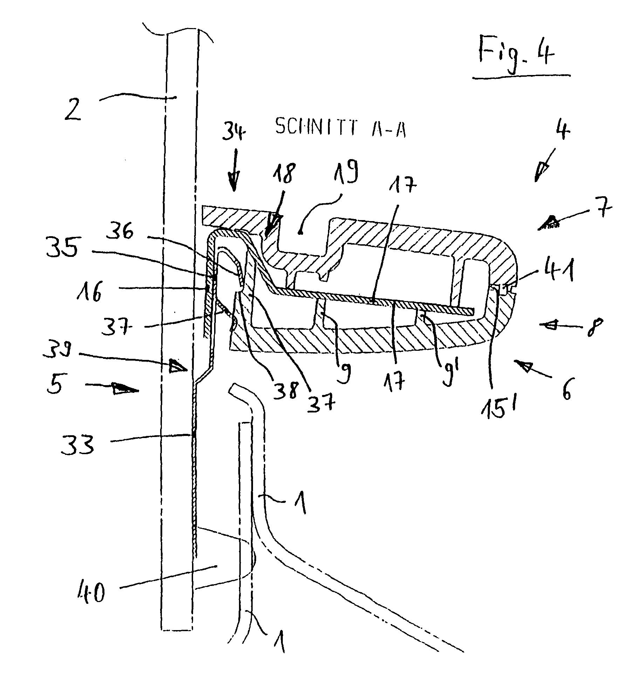

Die Führungsschiene 4 ist mit dem festen Fenster 2 verbunden, nämlich verklebt. Eine Absicherung wird durch zwei Fänger 5 bewirkt, die mit der Karosserie 1 durch eine Verklebung 40 verbunden sind und die eine Anlagefläche 33 und ein Clipsteil 34 aufweisen. Das Clipsteil 34 umfaßt eine nach oben weisende Lasche 35, von der ein Haken 36 abgekantet ist, und ein Klemmteil 37, das in dieselbe Richtung wie der Haken 36 weist und das aus dem mittleren Bereich der Lasche 35 herausgebogen ist. Das Clipsteil 34 wird zwischen die Abwinklung 16 des Einlegers 8 und die hintere Endwand 37 der Unterschale 6 eingeklemmt, wie in Fig. 4 dargestellt. Hierzu weist die hintere Endwand 37 einen Absatz 38 auf, der vom Ende des Hakens 36 hintergriffen wird.

Das Clipsteil 34 ist mit der Anlagefläche 33 des Fängers 5 durch eine Abkröpfung 39 verbunden. Die Anlagefläche 33 liegt an dem festen Fenster 2 an. Sie ist in ihrem unteren Endbereich mit dem festen Fenster 2 verklebt, und zwar durch dieselbe Verklebung 40, mittels der das feste Fenster 2 mit der Karosserie 1 verklebt ist. Durch die Verklebung 40 ist ferner die Anlagefläche 33 des Clipsteils 34 des Fängers 5 mit der Karosserie 1 verklebt.

Die Unterschale 6 und die Oberschale 7 sind in ihren äußeren Endbereichen durch eine weitere Fügestelle 41 verbunden, insbesondere verschweißt. Die hintere Endwand 37 der Unterschale 6 weist für jeden Fänger 5 eine Nut 42 auf, deren Tiefe im wesentlichen der Stärke der Lasche 35 entspricht.

Bei dem geschilderten Ausführungsbeispiel können Eigenspannungen durch Temperaturschwankungen verhindert werden. Hierzu dienen die in Längsrichtung der Führungsschiene 4 verlaufenden Längsschlitze 12, 14 im Einleger 8 und die zugehörigen Erhebungen 11, 13 in der Unterschale 6. Die Fänger 5 verhindern bei einem Bruch des festen Fensters 2 das Eindringen von Teilen der Seitenscheibe 2 und des beweglichen Fensters 3 in den Fahrzeug-Innenraum.

Das geschilderte Ausführungsbeispiel ermöglicht eine kostengünstige Fertigung durch einfache Werkzeuge. Durch die Verklebungen wird eine spannungsarme Befestigung möglich. Dabei ist eine hohe Stabilität erreichbar. Ferner wird eine hohe Designfreiheit ermöglicht, da zusätzliche Verkleidungen überflüssig sind, so daß eine große Designfläche vorhanden ist.

## Patentansprüche

1. Führungsschiene für ein bewegliches Fenster, insbesondere ein Schiebefenster (3), eines Kraftfahrzeugs, mit einer Unterschale (6), einer Oberschale (7) und einem Einleger (8) zwischen der Unterschale (6) und der Oberschale (7),
**dadurch gekennzeichnet,**
**daß** die Unterschale (6) und die Oberschale (7) an Fügestellen (15, 41) miteinander verbunden sind und daß die Oberschale (7) und/oder die Unterschale (6) eine oder mehrere Führungsbahnen, insbesondere Führungsnuten (19, 20), für ein bewegliches Fenster oder Schiebefenster (3) aufweisen.

2. Führungsschiene nach Anspruch 1, **dadurch gekennzeichnet, daß** die Unterschale (6) und die Oberschale (7) an den Fügestellen (15, 41) durch Verkleben und/oder Verschweißen, vorzugsweise Vibrationsverschweißen, miteinander verbunden sind.

3. Führungsschiene nach Anspruch 1 oder 2, **dadurch gekennzeichnet, daß** die Unterschale (6) und/oder die Oberschale (7) Rippen (9, 9', 10) aufweisen.

4. Führungsschiene nach einem der vorhergehenden Ansprüche, **dadurch gekennzeichnet, daß** die Fügestellen (15, 15') an den umlaufenden Rändern der Unterschale (6) und der Oberschale (7) und/oder an den Rippen (9, 9', 10) liegen.

5. Führungsschiene nach einem der vorhergehenden Ansprüche, **dadurch gekennzeichnet, daß** der Einleger (8) Durchbrechungen aufweist.

6. Führungsschiene nach Anspruch 5, **dadurch gekennzeichnet, daß** die Durchbrechungen als Schlitze (12, 12', 12", 14) ausgebildet sind.

7. Führungsschiene nach Anspruch 5 oder 6, **dadurch gekennzeichnet, daß** die Durchbrechungen bzw. Schlitze (12, 12', 12", 14) von Fügestellen oder Erhebungen (11, 11', 11", 13), an denen Fügestellen (15) liegen, durchgriffen werden.

8. Führungsschiene nach einem der Ansprüche 5 bis 7, **dadurch gekennzeichnet, daß** an einer oder mehreren Durchbrechungen bzw. Schlitzen (12, 12') und/oder an einer oder mehreren Fügestellen bzw. Erhebungen (11, 11') Ausrichtflächen (23, 24) vorgesehen sind.

9. Führungsschiene nach einem der Ansprüche 5 bis 8, **dadurch gekennzeichnet, daß** an einer oder mehreren Durchbrechungen bzw. Schlitzen (12', 12") und/oder an einer oder mehreren Fügestellen bzw. Erhebungen (11', 11") Ausgleichsfugen (29, 30) vorgesehen sind.

10. Führungsschiene nach einem der vorhergehenden Ansprüche, **dadurch gekennzeichnet, daß** der Einleger (8) eine Abwinkelung (16) aufweist.

11. Führungsschiene nach einem der vorhergehenden Ansprüche, **gekennzeichnet durch** einen Fänger (5), der mit der Führungsschiene (4) verbindbar ist.

12. Führungsschiene nach einem der vorhergehenden Ansprüche, **dadurch gekennzeichnet, daß** in der oder den Führungsbahnen bzw. Führungsnuten (19, 20) eines oder mehrere Reinigungslöcher (21, 22) vorgesehen sind.

## Claims

1. Guide rail for a moveable window, in particular a sliding window (3), of a motor vehicle, with a lower shell (6), an upper shell (7) and a mounting means (8) between the lower shell (6) and the upper shell (7), **characterized in that** the lower shell (6) and the upper shell (7) are connected to each other at joining points (15, 41), and **in that** the upper shell (7) and/or the lower shell (6) has/have one or more guide tracks, in particular guide grooves (19, 20), for a moveable window or sliding window (3).

2. Guide rail according to Claim 1, **characterized in that** the lower shell (6) and the upper shell (7) are connected to each other at the joining points (15, 41) by adhesive bonding and/or welding, preferably vibration welding.

3. Guide rail according to Claim 1 or 2, **characterized in that** the lower shell (6) and/or the upper shell (7) have ribs (9, 9', 10).

4. Guide rail according to one of the preceding claims, **characterized in that** the joining points (15, 15') are situated on the peripheral edges of the lower shell (6) and of the upper shell (7) and/or on the ribs (9, 9', 10).

5. Guide rail according to one of the preceding claims, **characterized in that** the mounting means (8) has apertures.

6. Guide rail according to Claim 5, **characterized in that** the apertures are designed as slots (12, 12', 12'', 14).

7. Guide rail according to Claim 5 or 6, **characterized in that** the apertures or slots (12, 12', 12'', 14) are reached through by joining points or by elevations (11, 11', 11'', 13) on which joining points (15) are situated.

8. Guide rail according to one of Claims 5 to 7, **characterized in that** aligning surfaces (23, 24) are provided on one or more apertures or slots (12, 12') and/or on one or more joining points or elevations (11, 11').

9. Guide rail according to one of Claims 5 to 8, **characterized in that** compensating gaps (29, 30) are provided on one or more apertures or slots (12', 12'') and/or on one or more joining points or elevations (11', 11'').

10. Guide rail according to one of the preceding claims, **characterized in that** the mounting means (8) has an angled portion (16).

11. Guide rail according to one of the preceding claims, **characterized by** an interceptor (5) which can be connected to the guide rail (4).

12. Guide rail according to one of the preceding claims, **characterized in that** one or more cleaning holes (21, 22) are provided in the guide track (s) or guide groove(s) (19, 20).

## Revendications

1. Glissière de guidage pour une vitre mobile, en particulier une vitre coulissante (3), d'un véhicule, avec une coque inférieure (6), une coque supérieure (7) et une insertion (8) entre la coque inférieure (6) et la coque supérieure (7), **caractérisée en ce que** la coque inférieure (6) et la coque supérieure (7) sont reliées l'une à l'autre en des sites d'assemblage (15, 41) et **en ce que** la coque supérieure (7) et/ou la coque inférieure (6) présentent une ou plusieurs glissières de guidage, en particulier des rainures de guidage (19, 20), pour une vitre mobile ou une vitre coulissante (3).

2. Glissière de guidage selon la revendication 1, **caractérisée en ce que** la coque inférieure (6) et la coque supérieure (7) sont reliées l'une à l'autre en les sites d'assemblage (15, 41) par collage et/ou soudage, de préférence soudage par vibration.

3. Glissière de guidage selon la revendication 1 ou 2, **caractérisée en ce que** la coque inférieure (6) et/ou la coque supérieure (7) présentent des nervures (9, 9', 10).

4. Glissière de guidage selon l'une des revendications précédentes, **caractérisée en ce que** les sites d'assemblage (15, 15') se trouvent sur les bords de périphérie de la coque inférieure (6) et de la coque supérieure (7) et/ou sur les nervures (9, 9', 10).

5. Glissière de guidage selon l'une des revendications précédentes, **caractérisée en ce que** l'insertion (8) présente des découpes.

6. Glissière de guidage selon la revendication 5, **caractérisée en ce que** les découpes sont formées comme des fentes (12, 12', 12'',14).

7. Glissière de guidage selon la revendication 5 ou 6, **caractérisée en ce que** les découpes ou fentes (12, 12', 12'', 14) sont percées par les sites d'assemblage ou les élévations (11, 11', 11'', 13), sur lesquelles se trouvent les sites d'assemblage (15).

8. Glissière de guidage selon l'une des revendications 5 à 7, **caractérisée en ce que**, sur une ou plusieurs découpes ou fentes (12, 12') et/ou sur un ou plusieurs sites d'assemblage ou élévations (11, 11'), sont prévues des surfaces de repos (23, 24).

9. Glissière de guidage selon l'une des revendications 5 à 8, **caractérisée en ce que**, sur une ou plusieurs découpes ou fentes (12', 12'') et/ou sur un ou plusieurs sites d'assemblage ou élévations (11', 11''), sont prévus des joints d'égalisation (29, 30).

10. Glissière de guidage selon l'une des revendications précédentes, **caractérisée en ce que** l'insertion (8) présente un pli (16).

11. Glissière de guidage selon l'une des revendications précédentes, **caractérisée par** un arrêt (5), qui peut être relié à la glissière de guidage (4).

12. Glissière de guidage selon l'une des revendications précédentes, **caractérisée en ce que** dans la ou les glissières ou rainures de guidage (19, 20), sont prévus un ou plusieurs orifices de nettoyage (21, 22).
